# EUROPÄISCHE PATENTANMELDUNG

(11) **EP 4 759 673 A1**
(43) Veröffentlichungstag der Anmeldung: **17.06.2026**
(21) Anmeldenummer: 25218684.6
(22) Anmeldetag: 26.11.2025
(51) Int. Cl.: B62B 3/14

(54) **STAPELBARES FAHRGESTELL FÜR EINEN EINKAUFSWAGEN**

(30) Priorität: 09.12.2024 DE 202024107136 U
(71) Anmelder: J.D. Geck GmbH, 58752 Altena (DE)
(72) Erfinder: Kroker, Thomas, 58513 Lüdenscheid (DE); Kaduk, Sven, 58093 Hagen (DE)
(74) Vertreter: Tarvenkorn, Oliver

(57) **Zusammenfassung**

Stapelbares Fahrgestell für einen Einkaufswagen, wenigstens umfassend einen sich nach vorn verjüngenden Fahrgestellrahmen (20) mit zwei Seitenholmen (21) und mit daran angebrachten Rollen und einem Vertikalrahmen mit wenigstens zwei seitlichen Holmen, wobei beide Seitenholme (21) jeweils wenigstens eine zumindest einpolige elektrische Außenkontakteinheit (31) an ihrer jeweiligen Außenseite und wenigstens eine zumindest einpolige elektrische Innenkontakteinheit (32) an ihrer jeweiligen Innenseite aufweisen, welche in einem dem Stapelmaß S entsprechenden Abstand zueinander angeordnet sind, wobei
- an einem Seitenholm (21) in einem Paar von einer Außenkontakteinheit (31) und einer Innenkontakteinheit (32) jeweils eine Kontakteinheit ein starres Kontaktelement besitzt, und jeweils eine andere Kontakteinheit ein federndes oder federnd gelagertes Kontaktelement (321) besitzt,
- dass der Abstand im Stapelmaß von einem vorstehenden Kontaktpunkt (328) des federnden Kontaktelements (321) aus bis zu einem Bezugspunkt im Mittenbereich des starren Kontaktelements gemessen ist und die Länge des starren Kontaktelements mindestens 5% des Stapelmaßes S beträgt und
- dass die Kontaktelemente (321, 341) jeweils auf einem elektrisch isolierenden Trägerelement (323, 343) angebracht sind.

## Beschreibung

Die Erfindung betrifft ein stapelbares Fahrgestell für einen Einkaufswagen mit den Merkmalen des Oberbegriffs des Anspruchs 1.

Im Bereich der Einkaufswagen, insbesondere bei der Entwicklung sogenannter smarter Einkaufswagen, hat es in den letzten Jahren erhebliche Fortschritte gegeben. Diese modernen Einkaufswagen sind oft mit verschiedenen technologischen Komponenten ausgestattet, wie zum Beispiel Displays, Handscannern und Gewichtsmesssystemen, die den Einkaufsvorgang für den Kunden erleichtern und effizienter gestalten sollen. Diese Technologien erfordern jedoch eine kontinuierliche Stromversorgung, um ordnungsgemäß zu funktionieren. Derzeit ist es üblich, dass die Batterien der Elektronikeinheit solcher smarten Einkaufswagen aufgeladen werden müssen. Dies geschieht in der Regel durch das händische Herstellen und Lösen einer Kabelverbindung, was nicht nur zeitaufwendig ist, sondern auch die Gefahr von Beschädigungen an den Kabeln oder den Ladeanschlüssen birgt.

Bekannte Systeme zur Stromversorgung smarter Einkaufswagen umfassen typischerweise manuelle Ladevorgänge, bei denen die Einkaufswagen zu einer Ladestation gebracht werden müssen. Diese Vorgehensweise ist nicht nur arbeitsintensiv, sondern kann auch zu Unterbrechungen im Betrieb führen, wenn die Wagen während der Ladenzeiten aufgeladen werden müssen. Zudem besteht das Risiko, dass Wagen nicht rechtzeitig aufgeladen werden, was zu einer eingeschränkten Verfügbarkeit der smarten Funktionen führen kann. Trotz der beträchtlichen Fortschritte auf dem Gebiet der smarten Einkaufswagen besteht nach wie vor ein Bedarf an effizienteren und zuverlässigeren Lösungen zur Stromversorgung, die den manuellen Aufwand minimieren und die Betriebszeit maximieren.

Die CN 206 569 113 U schlägt vor, die Batterien eines Einkaufswagens über zweipolige Stecker und Kupplungen aufzuladen, die an Bug und Heck der Einkaufswagen angebracht sind. Diese Anordnung macht die Steckverbindung zum einen anfällig für Beschädigungen, zum anderen ist ein exaktes Einschieben des Einkaufswagen von hinten in den vorne stehenden Stapel von Einkaufswagen erforderlich. In der Praxis werden Einkaufswagen jedoch auch schräg oder nicht genügend weit in den Stapel eingeschoben, so dass keine elektrische Verbindung kommen kann.

In CN 117 080 781A wird vorgeschlagen, unterhalb des Einkaufswagenkorbs eine Kontakteinheit anzubringen, die jeweils ein Paar von nach hinten und ein Paar von nach vor gewandten Kontaktplatten besitzt. Durch platte Kontaktelemente und eine formschlüssige Vorzentrierung ist das System weniger anfällig gegen schräges Einschieben, jedoch bleibt es anfällig, wenn Einkaufswagen nicht weit genug eingeschoben werden oder eventuell nach dem Einschrieben leicht zurückrollen. Auch kann es beschädigt werden, wenn ein zu starker Stoß beim Einschieben ausgeübt wird.

Die US 2019 0260220 A1 offenbart ein Ladesystem für Einkaufswagen, bei dem die Kontaktflächen zur Stromübertragung in den Seitenflächen der unteren seitlichen Holme des Fahrgestells angeordnet sind. Bei diesem System ist der Kontakt durch die seitliche Anordnung weniger beschädigungsanfällig und aufgrund der für das Stapeln notwendigen V-Form des Fahrgestells findet eine automatische Zentrierung statt. Dennoch entspricht die offenbarte Anordnung einem Idealbild, bei dem alle Fahrgestelle geometrisch exakt gleich sind, der Abstand zwischen Fahrgestellen im Stapel exakt gleich ist und die Innen- und Außenflächen benachbarter Fahrgestell-Holme direkt aneinander anliegen können. Allerdings würde eine solche Anordnung dazu führen, dass die gestapelten Fahrgestelle ineinander klemmen. In der Praxis kommt es außerdem aufgrund von Fertigungstoleranzen, Verformungen im Betrieb und dem Zustand des Untergrunds des Aufstellortes dazu, dass Abweichungen im Abstand und folglich Luftspalte zwischen benachbarten gestapelten Fahrgestellen entstehen, so dass die Kontaktierung nicht sicher möglich ist.

Es ist daher ein der vorliegenden Erfindung zugrunde liegendes technisches Problem, eine verbesserte Lösung zur Stromversorgung smarter Einkaufswagen bereitzustellen, die das Aufladen ermöglicht, ohne manuelle Kabelverbindungen herstellen zu müssen.

Diese Aufgabe wird durch ein stapelbares Fahrgestell für einen Einkaufswagen mit den Merkmalen des Anspruchs 1 gelöst.

Das stapelbare Fahrgestell für einen Einkaufswagen umfasst in üblicher Weise einen sich nach vorn verjüngenden Fahrgestellrahmen, an dem Rollen angebracht sind, und mit zwei Seitenholmen, sowie einen Vertikalrahmen mit mindestens zwei seitlichen Holmen und mindestens einem Querbügel.

Beide Seitenholme des Fahrgestellrahmens sind jeweils mit mindestens einer elektrischen Außenkontakteinheit an ihrer Außenseite und mindestens einer elektrischen Innenkontakteinheit an ihrer Innenseite ausgestattet. Diese Anordnung der elektrischen Kontakteinheiten ermöglicht eine effiziente und zuverlässige elektrische Verbindung zwischen gestapelten Fahrgestellen, die im Stapel eng beieinander stehen. Es müssen daher bei dieser Anordnung nur schmale Spalte überbrückt werden.

Insgesamt bietet die Erfindung eine innovative Lösung für die Integration von elektrischen Systemen in Einkaufswagen, die den Anforderungen moderner Einzelhandelsumgebungen gerecht wird, in denen technologische Integration und Anpassungsfähigkeit zunehmend an Bedeutung gewinnen. Diese Lösung unterstützt die Entwicklung von intelligenten Einkaufswagen, die mit erweiterten Funktionen ausgestattet sind, um das Einkaufserlebnis zu verbessern und gleichzeitig die Effizienz des Einzelhandelsbetriebs zu steigern.

Die Außenkontakteinheiten und Innenkontakteinheiten sind in einem Abstand zueinander angeordnet, der grundsätzlich dem Stapelmaß entspricht, was sicherstellt, dass die Kontakteinheiten beim Stapeln mehrerer Fahrgestelle automatisch in Kontakt treten und eine elektrische Verbindung herstellen.

Diese Konfiguration bietet mehrere Vorteile, darunter die Möglichkeit, nicht nur elektrische Energie, sondern auch Datensignale zwischen gestapelten Fahrgestellen zu übertragen, ohne dass zusätzliche Verkabelungen oder sonstige manuelle Verbindungen erforderlich sind. Dies ist besonders nützlich für Anwendungen, bei denen die Einkaufswagen, die auf den Fahrgestellen aufbauen, mit elektronischen Geräten zur Warenerfassung ausgestattet sind, wie beispielsweise mit wenigstens einem Scanner oder wenigstens einer mit einer künstlichen Intelligenz gekoppelten Kamera.

Wesentlich ist, dass der Abstand zwischen einer Außenkontakteinheit und einer Innenkontakteinheit so gewählt ist, dass bei dem Abstand, den zwei Fahrgestelle untereinander einnehmen, wenn sie ineinandergeschoben sind, die elektrische Verbindung sicher hergestellt wird. Dieser Abstand wird durch die Geometrie des Fahrgestellrahmens und/oder durch feste Anschlagpunkte am Fahrgestell fest vorgegeben und ist daher in einem Stapel aus baugleichen Fahrgestellen immer gleich. Dieser als Stapelmaß S bezeichnete Abstand dient bei der Erfindung als Grundlage für die Berechnung des Abstands zwischen den jeweiligen Paaren von Spannungsgeber und Spannungsnehmer ausbildenden Kontakteinheiten. Dabei werden Zu- und Abschläge bei diesem Maß einbezogen, um eine sichere Kontaktierung auch dann zu ermöglichen, wenn z.B. ein Fahrgestell beim Ineinanderschieben etwas von einem festen Anschlagspunkt am vorderen Fahrgestell zurückfedert und sich der Abstand zwischen benachbarten Einkaufswagen dadurch leicht vergrößert.

Damit sich die Kontaktelemente benachbarte Fahrgestelle beim sogenannten Stapeln, also beim Ineinanderschieben der Fahrgestelle, sicher treffen und einen zuverlässigen elektrischen Kontakt ausbilden, sieht eine bevorzugte Ausführungsform zusätzlich zu den Federelementen vor, zumindest eines der Kontaktelemente länger zu machen als das andere oder beide so lang zu machen und so anzuordnen, dass sich im Stapel ein Überlappungsbereich ausbildet.

Diese Position muss so festgelegt werden, dass die Fahrgestelle dauerhaft Kontakt haben, wenn Sie in der Parkposition stehen, auch wenn jemand den Einkaufswagen etwas herauszieht oder dieser leicht zurückfedert. Somit müssen die Fahrgestelle der Einkaufswagen nicht exakt ineinandergeschoben sein und haben trotzdem noch einen elektrischen Kontakt untereinander. Dazu ist insbesondere vorgesehen, dass der in Richtung der Längsachse L gemessene Abstand zwischen den zusammengehörenden Kontakteinheiten dem Stapelmaß S entspricht.

Der genannte Abstand bezieht sich auf die Distanz zwischen einem Kontaktpunkt des Kontaktelements, beispielsweise bei der Innenkontakteinheit, auf die Spitze des federnden Kontaktelements, und einem Bezugspunkt in einem Mittenbereich am länglichen Kontaktelements, beispielsweise genau in der Mitte. Außerdem entspricht die Länge des länglichen Kontaktelements mindestens 5% des Stapelmaßes. Damit werden auch bei den in der Praxis beim Stapeln auftretenden Abweichungen vom theoretischen Stapelmaß zuverlässige Verbindungen erreicht.

Vorgesehen sein kann, den Bezugspunkt genau in der Mitte der Länge vorzusehen, so dass sich gleich weite, Toleranzen ausgleichende Wege nach vorne und nach hinten ergeben.

Vorgesehen sein kann, den Bezugspunkt zwar im Mittenbereich, also nicht randseitig, aber nicht genau in der Mitte der Länge, sondern weiter hinten anzunehmen, beispielsweise bei 20% bis 40% der Länge, gemessen von einem seitlichen Rand. Dies ist gerade dann vorteilhaft, wenn es nach vorn einen Festanschlag für den eingeschobenen Einkaufswagen gibt. Dann kann ein größerer Teil der Länge dazu verwendet werden, auch in einer Situation eine Kontaktierung zu ermöglichen, bei der der Einkaufswagen nicht weit genug eingeschoben worden ist.

Schließlich kann man die Länge auch an den Bewegungsspielraum koppeln, den ein Pfandschlossystem mit seiner Kette ermöglicht. Es ist nicht auszuschließen, dass gut gestapelte Einkaufswagen weiter vorn im Stapel später wieder voneinander entfernt werden, wenn ein Benutzer einen Einkaufswagen hinten aus dem Stapel zieht. Idealerweise ist also die Länge und Positionierung des länglich-starren Kontaktelements gegenüber dem Kontaktpunkt am federnden Kontaktelement so gewählt, dass ein kleines Toleranzfeld nach vorn und eine größeres nach hinten gegeben ist, sodass der elektrische Kontakt solange bestehen bleibt, wie die Einkaufswagen durch ihre Pfandschlossysteme gekoppelt sind.

Das längliche Kontaktelement kann zwar auch elastisch sein, beispielweise durch einen federnd gelagerten Metallstreifen. Robuster und kostengünstiger herstellbar ist jedoch ein starres Kontaktelement, das zumindest nicht in einer solchen Weise elastisch ausgebildet, dass damit die in einem Einkaufswagenstapel typischerweise auftretenden Spalte zu überbrücken wären.

Diese spezifische Anordnung und Dimensionierung der Kontaktelemente ermöglicht eine präzise und zuverlässige elektrische Verbindung zwischen den Fahrgestellen, wenn diese gestapelt sind. Die genaue Positionierung der Elemente zueinander gewährleistet, dass die Kontaktelemente der Innen- und Außenkontakteinheiten in der richtigen Position zueinanderstehen, um eine optimale elektrische Leitfähigkeit zu gewährleisten. Die Länge des länglichen Kontaktelements, das insbesondere bei der Außenkontakteinheit vorgesehen ist, beträgt mindestens 5% des Stapelmaßes und stellt sicher, dass genügend in allen in der Praxis auftretenden Einschiebesituationen eine Kontaktfläche vorhanden ist, um eine stabile elektrische Verbindung zu ermöglichen. Diese Merkmale tragen dazu bei, dass die elektrischen Verbindungen zwischen den gestapelten Fahrgestellen robust und zuverlässig sind, was insbesondere bei der Nutzung von elektrischen Systemen in Einkaufswagen von Bedeutung ist. Ein Vorteil dieser Anordnung ist die erhöhte Sicherheit, da die präzise Positionierung und ausreichende Kontaktfläche das Risiko von elektrischen Fehlverbindungen oder Kurzschlüssen minimiert.

Nach der Erfindung umfasst das Fahrgestell eines Einkaufswagens eine spezifische Anordnung von elektrischen Kontakteinheiten an den Seitenholmen des Fahrgestellrahmens, bei der in jedem Paar eine Kontakteinheit wenigstens ein längliches Kontaktelement und die andere Kontakteinheit wenigstens ein federndes oder federnd gelagertes Kontaktelement aufweist.

Der Vorteil dieser Anordnung liegt in der verbesserten elektrischen Verbindung und Kontaktstabilität zwischen den gestapelten Fahrgestellen. Durch die Kombination von länglich-starren und federnden Kontaktelementen wird eine zuverlässige elektrische Verbindung sichergestellt, selbst wenn die Fahrgestelle in unterschiedlichen Positionen oder leicht variierenden Winkelstellungen zueinander gestapelt werden. Das federnde Kontaktelement kann sich an die Oberflächenunebenheiten und Toleranzen anpassen und überbrückt den größer werdenden Abstand zwischen den benachbarten Seitenholmen, wenn sich ein Fahrgestell gegenüber dem anderen leicht zurückbewegt. wodurch eine konstante und sichere Verbindung gewährleistet wird. Die Kombination von länglich-starren und federnden Kontaktelementen bietet eine robuste Lösung für die Herausforderungen der elektrischen Verbindung in einem dynamischen und oft rauen Einsatzumfeld, wie es bei Einkaufswagen der Fall ist.

Die zwischen benachbarten Fahrgestellen auszubildenden Kontaktstellen teilen sich also in zwei oder mehr Kontakte auf, wobei immer paarig ein Kontakt der zum benachbarten Fahrgestell führende Spannungsgeber und ein Kontakt der Spannungsnehmer des jeweiligen Fahrgestells ist.

Folgende Konfigurationen sind dabei grundsätzlich möglich:
- Einer der Seitenholme, also der linke oder der rechte, enthält eine Innenkontakteinheit und eine Außenkontakteinheit. Damit steht im Stapel eine vom Fahrgestell isolierte elektrische Leitung durch den gesamten Stapel zur Verfügung, wobei außerdem über die metallischen Fahrgestellrahmen eine Masseverbindung zwischen Fahrgestellen im Stapel hergestellt wird.
- Beide Seitenholme, also der linke und der rechte, enthalten jeweils eine Innenkontakteinheit und eine Außenkontakteinheit. Damit können links und rechts im Stapel zwei getrennte elektrische Leitungswege ausgebildet werden, ohne dass eine witterungsanfällige Masseverbindung zwischen den metallischen Oberflächen der Fahrgestelle genutzt werden muss.
- Der gleiche Vorteil wie vorstehend wird erreicht, indem einer der Seitenholme mehrpolige Kontakteinheiten aufweist, über die zugleich zwei oder mehr voneinander getrennte elektrische Leitungen hergestellt werden können.
- Denkbar ist auch, an wenigstens einem der Seitenholme mehrere Paare mit je einer Innenkontakteinheit und einer Außenkontakteinheit vorzusehen, indem diese Paare im Verlauf der Längserstreckung des Seitenholms versetzt hintereinander angeordnet sind. Dadurch kann entweder eine redundante Verbindung geschaffen werden, die die Sicherheit erhöht, oder es kann wenigstens eine zusätzliche Leitung hergestellt werden, die z.B. zur Datenübertragung nutzbar ist.

Mehrpolige Kontakteinheiten sind vorzugsweise so gestaltet, dass sie zwei oder mehr vertikal übereinander liegende Kontaktflächen aufweisen. Diese Anordnung ermöglicht eine zuverlässige und stabile elektrische Verbindung zwischen den Fahrgestellen, wenn diese ineinandergeschoben werden, wobei dann in der Ebene jedes Kontakts eine gesonderte Verbindung hergestellt wird. Die vertikale Anordnung der Kontaktflächen bei horizontaler Ausdehnung in die Länge sorgt dafür, dass getrennte elektrische Verbindungen an nur einer Übergangsstelle herstellbar sind. Die vertikale Anordnung der Kontaktflächen übereinander kann zudem die Wartung und Reinigung der Kontakte erleichtern, da Schmutz und Feuchtigkeit beim Ineinanderschieben abgestreift werden und daher die Funktion nicht beeinträchtigen. Ein weiterer Vorteil dieser Anordnung ist die Möglichkeit, mehrere elektrische Kontakte in einem kompakten Design zu integrieren, das die Gesamtästhetik und Funktionalität des Fahrgestells nicht beeinträchtigt. Die zwei- oder mehrpoligen Kontakteinheiten bieten zudem die Flexibilität, verschiedene elektrische Funktionen zu unterstützen, wie zum Beispiel die Übertragung von Energie für elektronische Geräte oder die Kommunikation zwischen den Fahrgestellen. Diese Merkmale tragen dazu bei, dass das Fahrgestell nicht nur als mechanische Unterstützung, sondern auch als integraler Bestandteil eines modernen, vernetzten Einkaufserlebnisses dient.

Möglich ist auch, dass die zweipoligen Kontakteinheiten jeweils wenigstens zwei horizontal hintereinander liegende Kontaktflächen aufweisen.

Nach einer bevorzugten Ausführungsform des Fahrgestells sind die Außenkontakteinheiten mit länglich-starren Kontaktelementen ausgestattet, während die Innenkontakteinheiten federnde Kontaktelemente aufweisen. Die länglich-starren Kontaktelemente der Außenkontakteinheiten sind stoßunempfindlich. Auf der anderen Seite bieten die federnden Kontaktelemente der Innenkontakteinheiten eine flexible und anpassungsfähige Verbindung. Diese Federmechanismen ermöglichen es den Innenkontakteinheiten, sich an verschiedene Kontaktpunkte anzupassen, was besonders nützlich ist, wenn das Fahrgestell mit anderen Komponenten oder Modulen innerhalb des Einkaufswagens verbunden wird. Die Federung sorgt dafür, dass trotz kleinerer Abweichungen in der Ausrichtung oder Position der Kontaktpunkte eine stabile elektrische Verbindung aufrechterhalten wird. Diese duale Kontaktausbildung, bei der starre und federnde Elemente kombiniert werden, ermöglicht eine erhöhte Zuverlässigkeit und Flexibilität im Betrieb des Fahrgestells. Ein weiterer Vorteil dieser Anordnung ist die potenzielle Reduzierung von Verschleiß und mechanischem Stress auf die Kontakte, da die federnden Elemente Bewegungen und Vibrationen absorbieren können, die andernfalls zu einer Beschädigung der Kontakte führen könnten. Diese Eigenschaften tragen dazu bei, die Lebensdauer der Kontakteinheiten zu verlängern und die Wartungsanforderungen zu minimieren. Darüber hinaus kann die Kombination aus länglich-starren und federnden Kontakten die Effizienz der Energieübertragung verbessern, indem sie sicherstellt, dass die Kontakte stets optimal ausgerichtet sind und somit den elektrischen Widerstand minimieren. Diese Merkmale sind besonders vorteilhaft in einem Umfeld, in dem Einkaufswagen häufig gestapelt und bewegt werden, da sie eine konsistente Leistung und Zuverlässigkeit gewährleisten, unabhängig von den physischen Bedingungen, denen das Fahrgestell ausgesetzt ist.

Vorzugsweise sind die als Spannungsnehmer dienenden Außenkontakteinheiten mit einem länglich-starren Kontaktelement versehen und befinden sich, in Fahrt- bzw. Längsrichtung gesehen, weiter vorn als die als Spannungsgeber dienenden Innenkontakteinheiten, die ein federndes Kontaktelement besitzen und weiter hinten positioniert sind. Damit sind die federnden Kontaktelemente beim normalen Gebrauch des Fahrgestelles, also außerhalb des Stapels gegen Anstoßen geschützt.

Eine umgekehrte Anordnung ist jedoch ebenso möglich.

Die Kontaktelemente sind aus einem elektrisch leitfähigen Material gebildet wie z. B. Messing oder Kupfer.

Alle Kontaktelemente sind auf einem elektrisch isolierenden Trägerelement angebracht, das z.B. aus Kunststoff besteht, insbesondere da, wie meist, der Fahrgestellrahmen aus Metallprofilen besteht. Die Verwendung von elektrisch isolierenden Trägerelementen verhindert Kurzschlüsse und sorgt für eine sichere und zuverlässige elektrische Isolation der Kontaktelemente. Diese Konstruktion ermöglicht es, dass die elektrischen Kontakteinheiten auch bei wiederholtem Gebrauch und unter verschiedenen Umweltbedingungen funktionsfähig bleiben. Ein weiterer Vorteil dieser Anordnung ist die einfache Wartung und Austauschbarkeit der Kontaktelemente, da sie modular auf den Trägerelementen montiert sind. Dies erleichtert die Instandhaltung und verlängert die Lebensdauer des Fahrgestells.

Nach einer weiteren Ausführungsform umfasst das Fahrgestell Trägerelemente, die jeweils unterhalb und oberhalb der Kontaktelemente Schutzstege aufweisen, die sich in Längsrichtung der Seitenholme erstrecken. Diese Schutzstege schützen die Kontaktelemente physisch gegen Stöße und erhöhen somit deren Funktionalität und Langlebigkeit. Die Schutzstege dienen auch als Barriere gegen äußere Einflüsse wie Schmutz oder Feuchtigkeit, die die elektrischen Kontakte beeinträchtigen könnten. Durch die Platzierung der Schutzstege oberhalb und unterhalb der Kontaktelemente wird sichergestellt, dass die Kontaktelemente in einem geschützten Raum liegen, was die Wahrscheinlichkeit von Kurzschlüssen oder Korrosion reduziert. Dies ist besonders vorteilhaft in Umgebungen, in denen die Einkaufswagen regelmäßig im Freien verwendet werden und somit verschiedenen Wetterbedingungen ausgesetzt sind. Die Schutzstege tragen auch zur strukturellen Integrität des Fahrgestells bei, indem sie die Stabilität der Trägerelemente erhöhen und somit die sichere Verbindung der elektrischen Kontakte gewährleisten. Die Schutzstege sind so gestaltet, dass sie die Funktionalität der elektrischen Kontakte nicht beeinträchtigen, sondern vielmehr deren Effizienz durch den Schutz vor äußeren Einflüssen steigern. Sie verhindern, dass die Kontaktelemente beim Stapeln beschädigt werden. Dies ist besonders wichtig, um die Langlebigkeit und Zuverlässigkeit der elektrischen Verbindung zwischen gestapelten Fahrgestellen zu gewährleisten.

Nach einer weiteren Ausführungsform sind die Kontakteinheiten so konzipiert, dass ihre Trägerelemente in Ausnehmungen in den inneren und/oder äußeren Seitenflächen der Seitenholme des Fahrgestellrahmens eingesetzt werden und nur die eigentlichen Kontaktelemente flächenbündig mit den Seitenflächen der Seitenholme sind oder darüber vorragen. Kabelverbindungen von und zu den Kontakteinheiten können innerhalb der Hohlprofile, die das Fahrgestell üblicherweise ausbilden, verlegt werden. Durch die flächenbündige Platzierung der Trägerelemente in Ausnehmungen wird zudem die äußere Kontur des Fahrgestells kaum verändert, was das Stapeln der Fahrgestelle erleichtert.

Die Integration der Kontakteinheiten in die Seitenholme des Fahrgestellrahmens trägt zur Robustheit und Langlebigkeit des Systems bei, da die Kontakteinheiten durch die stabile Struktur des Fahrgestells geschützt sind und weniger anfällig für Beschädigungen durch äußere Einflüsse sind. Zudem wird die Handhabung der Fahrgestelle vereinfacht, da die elektrische Verbindung automatisch hergestellt wird, sobald die Fahrgestelle gestapelt werden, was die Effizienz im Betrieb erhöht und die Notwendigkeit für manuelle Eingriffe reduziert.

Bei einer Kontakteinheit mit wenigstens einem federnden Kontaktelement sind bevorzugt Versionen vorgesehen, bei denen das federnde Kontaktelement als Federdruckkontakt oder als Federblechkontakt ausgebildet ist.

Beim Federdruckkontakt ist ein gegen die Kraft einer Feder im Trägerelement verschiebbares Kontaktelement vorgesehen, beispielsweise ein 20. Dieser ist in einer Führung verschiebbar geführt und weist Formschlussmittel auf, um ihn gegen die Federkraft innerhalb der Führung zu halten und/oder um ein zu weites Eindrücken in die Führung zu vermeiden.

Nach einer weiteren Ausführungsform der Erfindung ist wenigstens ein federndes Kontaktelement vorgesehen, das durch ein Federblech ausgebildet ist. Dieses Federblech ist so gestaltet, dass es eine spezifische Kontur aufweist, die eine elastische Verformung quer zur Längserstreckung des Seitenholms ermöglicht. Diese Verformung führt zu einer Auslängung des Federblechs, was eine verbesserte Anpassungsfähigkeit und Flexibilität bei der elektrischen Kontaktierung zwischen den Komponenten des Fahrgestells gewährleistet. Durch die elastische Verformbarkeit des Federblechs wird eine konstante Kontaktkraft aufrechterhalten, die für eine stabile elektrische Verbindung sorgt, selbst bei leichten Bewegungen oder Vibrationen, die während des Gebrauchs auftreten können.

Nach einer vorteilhaften Ausführungsform der Erfindung weist das Fahrgestell neben einem Frontabschnitt, über den sich die Seitenholme zu einem durchgängigen, bügelförmigen Fahrgestellrahmen ergänzen, außerdem einen nach hinten dazu versetzten Querholm auf, durch den die Seitenholme gegeneinander abgestützt sind. An dem Querholm kann weiteres, von hinten eingeschobenes Fahrgestell anschlagen, so dass das Stapelmaß S dem Abstand entspricht, den zwei Fahrgestelle untereinander einnehmen, wenn sie ineinander geschoben sind und ein Frontabschnitt eines hinten stehenden Fahrgestells am Querholm eines vorne stehenden Fahrgestells anliegt.

Als Vorteil ergibt sich, dass der Einschiebeweg des von hinten eingeschobenen Fahrgestelles begrenzt wird und dadurch ein Verklemmen der Fahrgestelle ineinander verhindert wird. Außerdem ist der Raum zwischen dem Frontabschnitt und dem Querholm vor Stößen geschützt und kann zur Anordnung empfindlicher Baugruppen wie beispielweise einer Batterie und/oder einer Ladeelektronik genutzt werden.

Das Fahrgestell kann mit den üblichen Warenaufnahmen versehen werden, um einen vollständigen Einkaufswagen auszubilden, also insbesondere mit einem Korb oben und/oder einer Bodenablage darunter. Vorzugsweise werden die Warenaufnahmen über Wiegezellen auf dem Fahrgestell gelagert. Um stapelbar zu sein, besitzt der Einkaufswagen nicht nur ein sich nach vorn verjüngendes Fahrgestell, sondern auch einen oberen, sich nach vorn verjüngenden Warenkorb mit einer verschwenkbaren Rückwandklappe Sofern auch eine untere Ablagefläche vorhanden ist, ist von einem Ablagerahmen umfasst, der gelenkig am Fahrgestell gelagert ist und mit seinem hinteren Endbereich beim Stapeln von mehreren gleichen Einkaufswagen anhebbar ist.

Nach der Erfindung ist es möglich, mehrere Einkaufswagen ineinander zu schieben und gleichzeitig im Stapel einen mindestens zweipoligen elektrischen Kontakt zwischen den Fahrgestellen herzustellen, so dass die Batterien aller Einkaufswagen in dem Stapel gleichzeitig geladen werden können.

Wenn benutzte Einkaufswagen mit den erfindungsgemäßen Fahrgestellen, zurück in die Reihe gestellt werden, zentrieren sie sich durch das Ineinanderschieben automatisch und stellen die elektrischen Kontakte her. Damit ist ein Aufladen nicht nur während der Ladenschlusszeiten, sondern auch fortlaufend im Betrieb möglich, solange ein Einkaufswagen im Stapel abgestellt ist.

Zudem bezieht sich die Erfindung auf eine Park- und Ladestation für einen Stapel von Fahrgestellen.

In der Park- und Ladestation ist ein Reihenanfangselement vorgesehen, in das der erste Einkaufswagen mit einem erfindungsgemäßen Fahrgestell geschoben wird, um den Anfang einer Ladekette zu bilden. Das Reihenanfangselement besitzt wenigstens eine Reihenanfangskontakteinheiten, die hinsichtlich Form und Position kompatibel zu der wenigstens einen Außenkontakteinheit am Fahrgestell ist. Sofern die Fahrgestelle eine mehrpolige Außenkontakteinheit aufweisen, ist auch die Reihenanfangskontakteinheit mehrpolig ausgebildet. Sofern die Fahrgestelle gemäß einer der oben beschriebenen bevorzugten Ausführungsformen mit je einer Außenkontakteinheit auf jeder Seite versehen ist, sind entsprechend zwei Reihenanfangskontakteinheiten vorgesehen. Die Reihenanfangskontakteinheiten sind bevorzugt mit federnden Kontaktelementen versehen.

Die Park- und Ladestation umfasst vorzugsweise ein Gehäuse, das einen Stromanschluss für das elektrische Wechselstromnetz hat und über ein Netzteil verfügt, dessen Ausgangspole mit den Reihenanfangskontakteinheiten in Verbindung stehen.

Weiterhin kann vorgesehen sein, dass die Fahrgestelle selbst jeweils eine Elektronikeinheit aufweisen, die eine Ladezustandskontrolle, eine Verbindungskontrolle und ggf. eine Datenkommunikation von im Stapel benachbarten Fahrgestellen ermöglicht. Damit sind verschiedene Lademodi einstellbar:
- Erkennt die Elektronikeinheit eines im Stapel stehenden Fahrgestells, dass aus dem vorderen Abschnitt des Stapels heraus kein Strom zu der als Stromaufnehmer dienenden Außenkontakteinheit fließt, führt sie eine Ladezustandskontrolle des eigenen Energiespeichers aus.
- Sofern der Ladezustand oberhalb eines ersten Schwellwerts ist, kann die Elektronikeinheit eine Verbindung des Energiespeichers zur eigenen Innenkontakteinheit herstellen, so dass darüber Batterien von weiter hinten im Stapel stehenden Fahrgestellen geladen werden können. Außerdem kann eine weitere Verbindung zur eigenen Außenkontakteinheit hergestellt werden, so dass auch eine Batterie eines im Stapel vorn stehenden Fahrgestells geladen werden kann, das selbst auch von der Park- und Ladestation abgeschnitten ist. Sinkt der Ladezustand unter einen zweiten Schwellwert, werden diese Verbindungen unterbrochen.
- Ist der eigene Ladezustand bei unterbrochener Verbindung zum Reihenanfangselement bereits unterhalb des ersten Schwellwerts, so kann ebenfalls eine Verbindung zwischen der eigenen Batterie und der eigenen Innenkontakteinheit hergestellt werden, die aber nur in eine Richtung durchlässig ist, um die eigene Batterie über die Batterie wenigstens eines im Stapel hinten stehenden Fahrgestells zu laden.

Vorteilhaft ist, dass eine vom Rest des Stapels isolierte Gruppe von Fahrgestellen eine Parallelschaltung mehrerer Batterien bildet, zwischen den ausgleichende Ladungen einfach möglich sind.

Möglich ist auch, dass die Fahrgestelle miteinander durch digitalen Datenaustausch über eine oder mehrere der Kontakteinheit kommunizieren, um sich untereinander und/oder mit der Park- und Ladestation softwaregesteuert abzustimmen. Dazu können Datensignale auf die der Stromversorgung dienenden Leitungen, die im Stapel zwischen den Fahrgestellen ausgebildet sind, aufmoduliert werden.

Eine weitere Möglichkeit besteht darin, die Elektronikeinheit mit anderen Komponenten desselben Einkaufswagens oder anderer Einkaufswagen zu vernetzen, indem die elektrischen Kontakteinheiten an den Seitenholmen des Fahrgestellrahmens auch zur Datenübertragung genutzt werden.

Diese Vernetzung kann darüber hinaus eine drahtlose Kommunikation und Datenübertragung zwischen verschiedenen elektronischen Komponenten der Einkaufswagen und einer übergeordneten Zentraleinheit vorsehen. Die Elektronikeinheit kann z. B. mit einem zentralen System des Supermarkts verbunden sein, um Echtzeitinformationen zu liefern oder um den Einkaufswagen zu orten. Dies bietet dem Nutzer eine verbesserte Einkaufserfahrung und dem Supermarkt eine Möglichkeit zur besseren Verwaltung der Einkaufswagenflotte.

Die Erfindung wird nachfolgend mit Bezug auf die in den Zeichnungen dargestellten Ausführungsbeispiele beschrieben. Die Figuren zeigen im Einzelnen:
- Figur 1: eine Ausführungsform eines stapelbaren Fahrgestells für einen Einkaufswagen in perspektivischer Ansicht von schräg oben;
- Figur 2: zwei ineinander gestapelte Fahrgestelle in perspektivischer Ansicht von schräg unten;
- Figur 3: das Fahrgestell von oben;
- Figur 4: zwei ineinander gestapelte Fahrgestelle von oben;
- Figur 5: einen auf dem Fahrgestell aufgebauten Einkaufswagens in perspektivischer Ansicht von schräg oben;
- Figur 6: eine erste Ausführungsform einer Innenkontakteinheit mit einem federnden Kontaktelement in perspektivischer Ansicht;
- Figur 7: eine zweite Ausführungsform einer Innenkontakteinheit mit einem federnden Kontaktelement in perspektivischer Ansicht;
- Figur 8: eine dritte Ausführungsform einer Innenkontakteinheit mit einem federnden Kontaktelement in perspektivischer Ansicht;
- Figur 9: eine vierte Ausführungsform einer Innenkontakteinheit mit einem federnden Kontaktelement in perspektivischer Ansicht;
- Figur 10: eine Vorderseite einer Außenkontakteinheit in perspektivischer Ansicht;
- Figur 11: eine Rückseite einer Außenkontakteinheit in perspektivischer Ansicht;
- Figur 12: einen Teil eines Seitenholms eines Fahrgestells mit einer Außenkontakteinheit und einer Innenkontakteinheit von oben;
- Figur13, 14: jeweils einen Ausschnitt zweier gestapelter Fahrgestelle in verschiedenen Positionen zueinander von oben und
- Figur 15: ein Fahrgestell mit einer Ladeeinrichtung, in perspektivischer Ansicht von schräg oben.

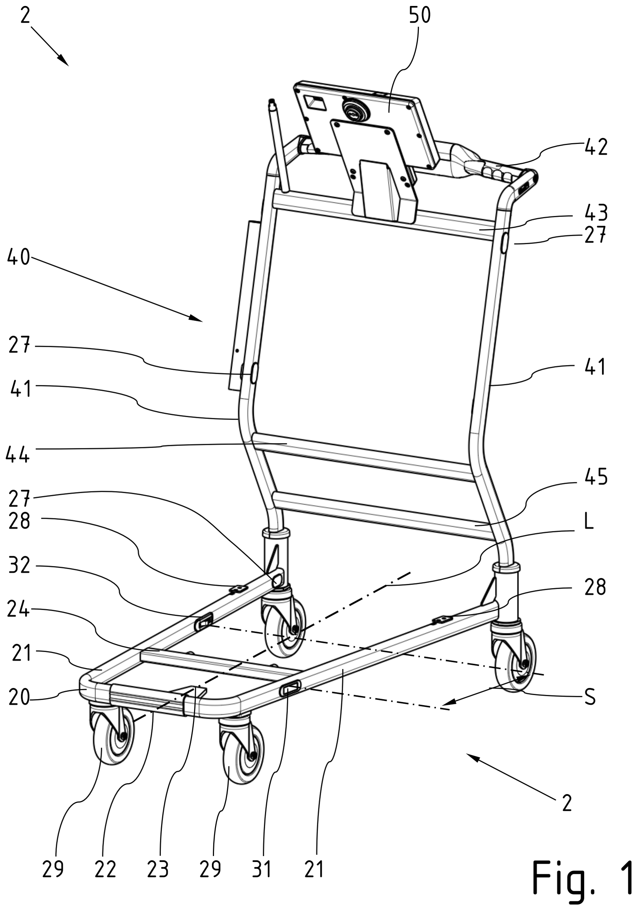

Figur 1 zeigt ein stapelbares Fahrgestell 2 für einen Einkaufswagen. Das Fahrgestell 2 umfasst einen Fahrgestellrahmen 20 und einen Vertikalrahmen 40. Der Fahrgestellrahmen 20 besteht aus zwei Seitenholmen 21, die in einer sich nach vorn verjüngenden Anordnung zueinander ausgerichtet sind. Sie ergänzen sich über einen Frontabschnitt 22 zu einem durchgängigen, bügelförmigen Fahrgestellrahmen 20 und sind außerdem durch einen Querholm 24 gegeneinander abgestützt.

Zwischen dem Frontabschnitt 22 und dem Querholm 24 ist eine Konsole 23 angebracht, auf der eine Wiegezelle und/oder ein Verteilerkasten und/oder eine Elektronikeinheit angebracht werden können. Über weitere Wiegezellenaufnahmen 28 an den Seitenholmen 21 ist das Fahrgestell 2 vorbereit, um einen Warenkorb über insgesamt drei Wiegezellen am Fahrgestell 2 zu lagern und dadurch das Gewicht der in den Warenkorb 10 eingelegten Güter nachzuverfolgen.

Das Fahrgestell 2 ist mit vier pendelnd gelagerten Rollen 29 ausgestattet. Die Seitenholme 21 sind mit mehreren elektrischen Kontakteinheiten versehen, darunter eine Außenkontakteinheit 31 und eine Innenkontakteinheit 32, wobei die Kontakteinheiten 31, 32 in einem dem Stapelmaß S entsprechenden Abstand zueinander angeordnet sind.

Der Vertikalrahmen 40 besteht aus zwei seitlichen Holmen 41 und mehreren Querbügeln 42, 43, 44, 45, wovon der oberste als Schiebebügel dient. Am Querbügel 43 ist eine Elektronikeinheit 50 für die Kommunikation mit einem Benutzer angebracht.

Die Seitenholme 21 des Fahrgestellrahmens 20 sind mit verschiedenen elektrischen Kontakteinheiten ausgestattet. Die Außenkontakteinheit 31 befindet sich an der Außenseite der Seitenholme 21, während die Innenkontakteinheit 32 an der Innenseite der Seitenholme 21 angebracht ist. Diese Kontakteinheiten 31, 32 sind so positioniert, dass sie beim Stapeln mehrerer Fahrgestelle miteinander in Kontakt treten können, um eine elektrische Verbindung herzustellen.

An Innenflächen der Seitenholme 21 und am Vertikalrahmen 40 sind an verschiedenen Stellen Verschlussstopfen 27 vorgesehen. Diese decken Zugangsöffnungen in den Metallhohlprofilen ab, die das Fahrgestell 2 bilden und sind vorgesehen, um das Einziehen von Kabeln zu erleichtern.

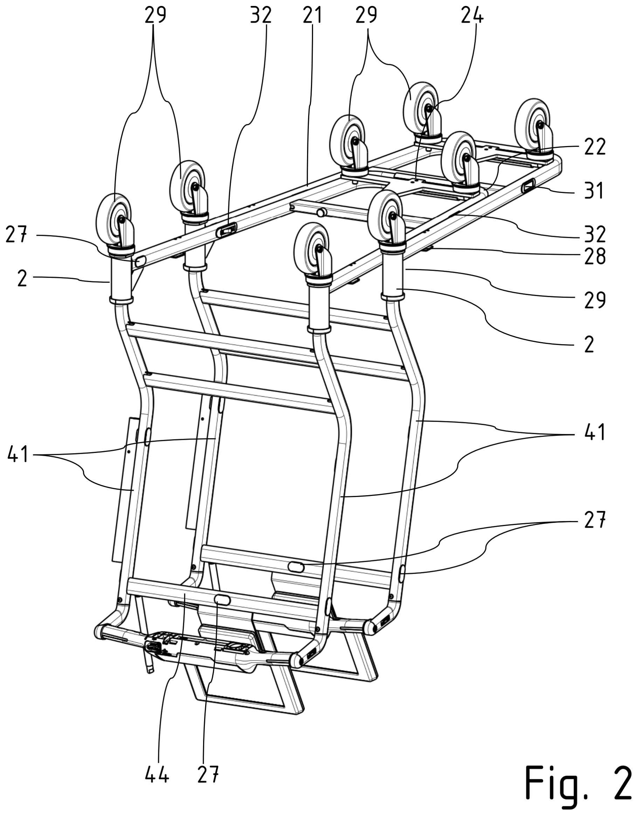

Figur 2 zeigt zwei ineinander gestapelte Fahrgestelle 2 in perspektivischer Ansicht von schräg unten. Der Fahrgestellrahmen 20 des hinteren Fahrgestells 2 liegt mit seinem Frontabschnitt 22 an Puffern am Querholm 24 an, wodurch der kleinstmögliche Abstand zwischen gestapelten Fahrgestellen 2 festgelegt ist.

Die Kontakteinheiten 31, 32 sind durch ihre Integration in die Seitenholme 21 optisch kaum wahrnehmbar. Die Abbildung verdeutlicht, dass die elektrischen Kontakteinheiten 31, 32 sowohl an den Außen- als auch an den Innenseiten der Seitenholme 21 angebracht sind, um elektrische Verbindungen zwischen den gestapelten Fahrgestellen 2 auszubilden.

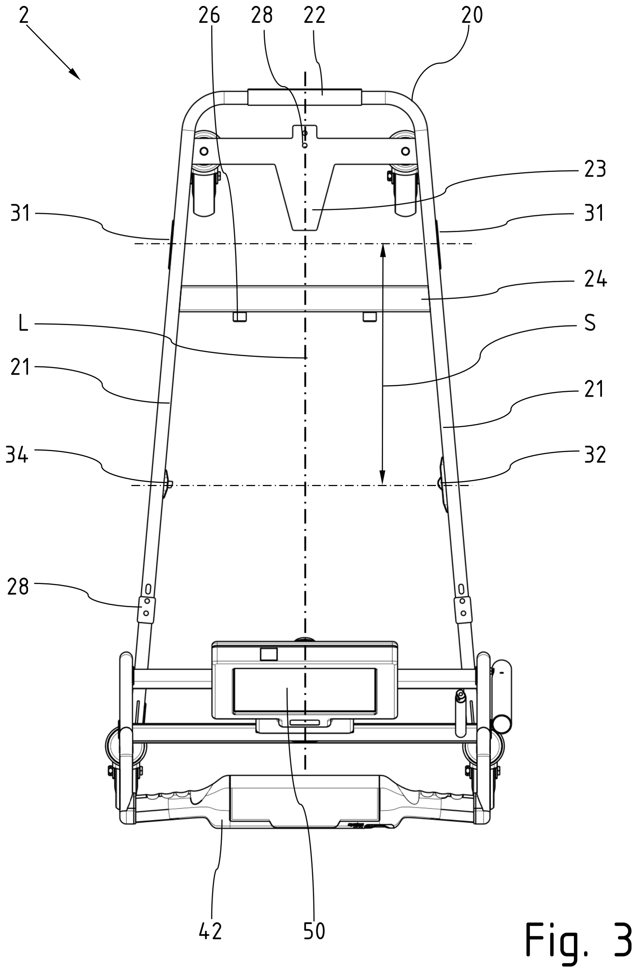

Figur 3 zeigt das Fahrgestell 2 von oben. Puffer 26 am Querholm 24 dämpfen den Anstoß eines von hinten eingeschobenen Einkaufswagens im Stapel. Die Außenkontakteinheiten 31 sind an gleicher Position in Bezug auf die Längsachse L angeordnet. In einem Abstand S davon sind die beiden Innenkontakteinheiten 32, 34 angeordnet. In dem dargestellten Beispiel sind die Innenkontakteinheiten 32, 34 unterschiedlich. Die Innenkontakteinheit 32 besitzt einen länglichen Federblechkontakt und hat durch die Länge den Vorteil, eine Toleranz beim Abstand zweier Einkaufswagen in Bezug auf die Längsachse gut ausgleichen zu können. Die linke Innenkontakteinheit 34 besitzt ein Federdruckelement, das heißt, das bolzenförmige Kontaktelement ist gegen die Kraft eines Federelements wie einer Spiraldruckfeder in einem Trägerelement gelagert und quer zu dessen Längserstreckung verschiebbar. Durch die Länge des mittels der Feder aus dem Seitenholm 21 herausgeschobenen Bolzens kann eine größere Seitendistanz, quer zur Längsachse, zwischen den Seitenholmen 21 zweier benachbarter Fahrgestelle überbrückt werden.

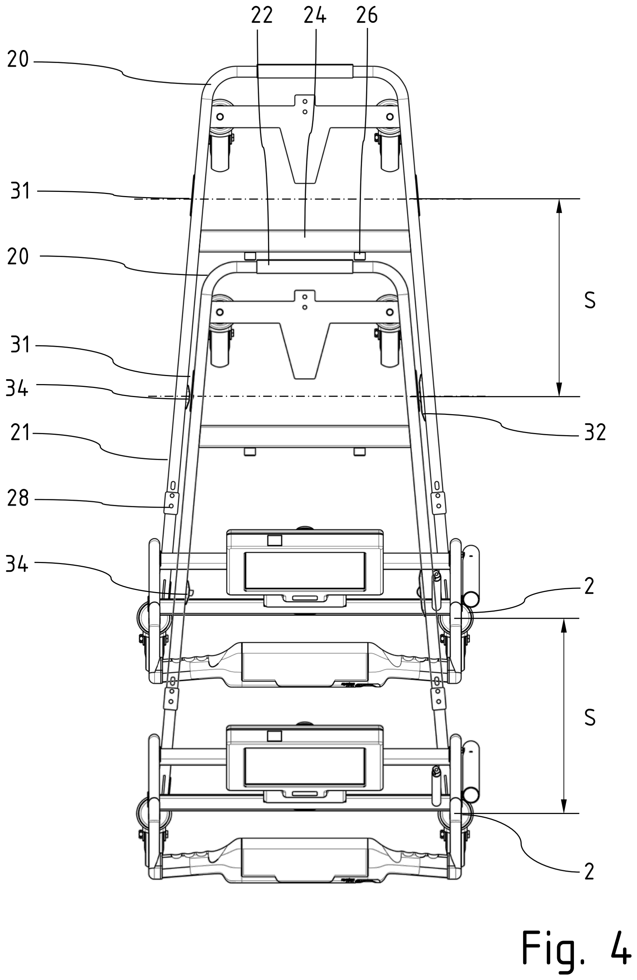

In Figur 4 ist die Kombination zweier Fahrgestelle 2 von oben gezeigt. Fahrgestelle 2 sind maximal aneinander angeschoben. Der Frontabschnitt 22 des hinten stehenden Fahrgestells 2 liegt an den Puffern 26 am Querholm 24 des vorne stehenden Fahrgestells 2 an. Daraus ergibt sich das Stapelmaß S. In dieser Positionierung liegen die Außenkontakteinheiten 31 des hinten stehenden Fahrgestells 2 an den Innenkontakteinheiten 32, 34 des vorne stehenden Fahrgestells 2 an, so dass eine elektrische Leitung von einem Fahrgestell 2 zum anderen ausgebildet wird.

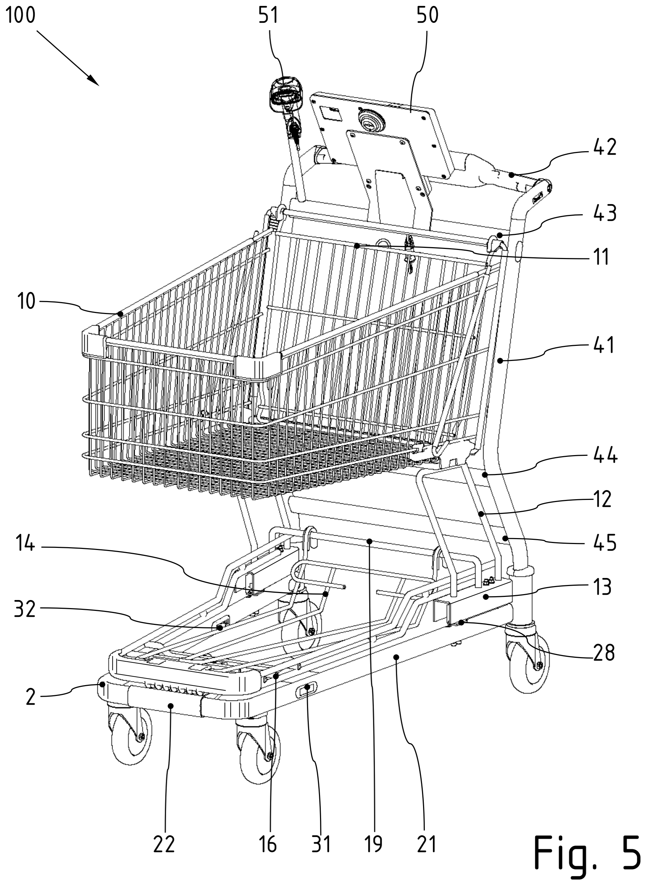

Figur 5 zeigt einen vollständigen Einkaufswagen 100 mit einem Fahrgestell 2, und einem oberen Warenkorb 10, der sich nach vorn verjüngt und eine verschwenkbare Rückwandklappe 11 aufweist. Der Warenkorb 10 ist über Abstandsbügel 12 mit Konsolen 13 verbunden, unter denen sich Wiegezellen befinden. Diese sind jeweils an den Wiegezellenaufnahmen 28 befestigt. Derjenige Teil des Einkaufswagens 100, der der Warenaufnahme dienen, die sog. Warenaufnahmeeinheit, weist außerdem eine untere Ablagefläche 14 auf, wobei die Ablagefläche 14 von einem Ablagerahmen 16 umfasst ist, der gelenkig über eine Achse 19 am Fahrgestell 2 gelagert ist und mit seinem hinteren Endbereich beim Stapeln von mehreren gleichen Einkaufswagen 100 anhebbar ist. Die Warenaufnahmeeinheit ist mit dem Fahrgestell 2 nur über zwei Wiegezellen verbunden, die sich jeweils im hinteren Bereich auf den Seitenholmen 21 befinden, und über eine dritte Wiegezelle, die in der Abbildung verdeckt hinter dem Frontabschnitt 22 auf der Konsole 23 (siehe Figur 1) des Fahrgestellrahmens 20 positioniert ist.

Die Elektronikeinheit 50 und ein Handscanner 51 sind am Vertikalrahmen 40 montiert, der die seitlichen Holme 41, den Schiebebügel 42 und weitere Querbügel 43, 44 umfasst.

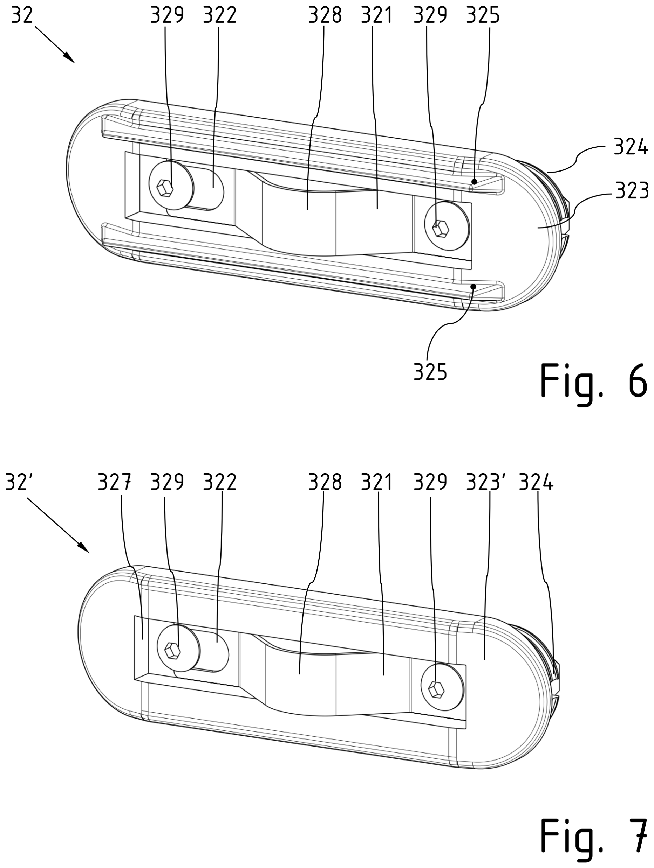

Figur 6 eine Innenkontakteinheit 32 mit einem federnden, streifenförmigen Kontaktelement 321, das mit zwei Schrauben 329 an einem elektrisch isolierenden Trägerelement 323 befestigt ist.

Dabei ist nur durch die rechte Schraube 329 eine punktuelle Festlegung des als Federblech ausgebildeten Kontaktelements 321 gegeben, wohingegen die linke Schraube 329 eine Seitenführung in einem Langloch 322 bewirkt. Wird der V-förmig ausgebildete, vorspringende Abschnitt des Kontaktelements 321 gestaucht, so längt sich das Kontaktelement 321. Hierfür ist eine einachsige Beweglichkeit durch die Führung im Langloch 322 gegeben. Der vorspringende Abschnitt des Kontaktelements 321 bildet einen Kontaktpunkt 328, der als Bezugspunkt für die Anordnung der paarweise zusammengehörigen Kontakteinheiten zueinander gilt. Das Kontaktelement 321 ist im Bereich der Schrauben 329 in einer Vertiefung 327 im Trägerelement 323 befestigt. Durch die Vertiefung 327 ragen keine Schraubenköpfe hervor.

Ober- und unterhalb des Kontaktelements 321 besitzt das Trägerelement 323 vorspringende Schutzstege 325, die so weit hervorragen, dass nur der V-förmige Federabschnitt des Kontaktelements 321 aus dem Paar von Schutzstegen 325 herausragt, während das Kontaktblech und die Schrauben 329 vor mechanischen Beschädigungen durch anstoßende Fahrgestellrahmen benachbarter Fahrgestelle geschützt sind.

Das Trägerelement 323 besitzt an seiner Rückseite einen im Umfang verkleinerten Absatz 324, über den es in eine langlochförmige Ausnehmung in einem Seitenholm einsetzbar ist, so dass nur der im Umfang größere Teil des Trägerelements 323, an dem das offenliegende Kontaktelement 321 gehalten ist, auf der Außenseite des Seitenholms aufliegt.

Figur 7 zeigt eine Innenkontakteinheit 32', die sich von der zuvor mit Bezug auf Figur 6 beschriebenen nur dadurch unterscheidet, dass das Trägerelement 323' keine Schutzstege aufweist. Dennoch ist ein gewisser Schutz des Kontaktelements 321 und der Schrauben 329 durch eine Anbringung in der Vertiefung 327 des Trägerelements 323' gegeben.

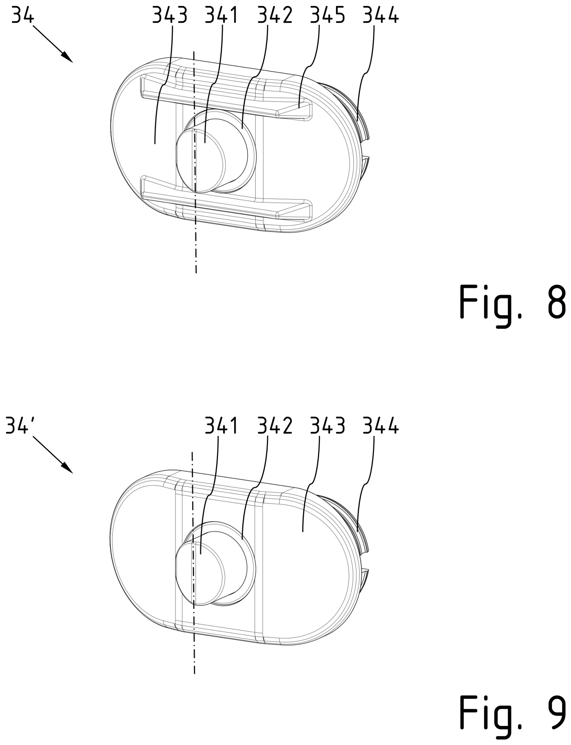

Eine andere Variante einer Innenkontakteinheit 34 zeigt Figur 8. Dort ist ein bolzenförmiges Kontaktelement 341 vorgesehen, das an seiner Stirnseite von einer vertikalen Mittelachse ausgehend beidseits angeschrägt ist, um Auflaufschrägen zu bilden. Die Stirnseite des Kontaktelements 341 zwischen den Auflaufschrägen bildet den Kontaktpunkt. Das Kontaktelement 341 ist in einer Buchse 342 gegen die Kraft einer nicht sichtbaren Druckfeder verschiebbar gelagert. Die Buchse 342 besteht beispielsweise aus Messing, um eine elektrische Verbindung zu dem verschiebbaren Bolzen, der als Kontaktelement 341 dient, herzustellen. Die Buchse 342 ist in einem elektrisch isolierenden Trägerelement 343 aufgenommen.

Ober- und unterhalb des Kontaktelements 341 besitzt das Trägerelement 343 vorspringende Schutzstege 345, die so weit hervorragen, dass ein vorderer Abschnitt des Kontaktelements 341 aus dem Paar von Schutzstegen 345 herausragt, während der restliche Abschnitt und die Buchse 342 vor mechanischen Beschädigungen durch anstoßende Fahrgestellrahmen benachbarter Fahrgestelle geschützt sind.

Das Trägerelement 343 besitzt an seiner Rückseite einen im Umfang verkleinerten Absatz 344, über den es in eine langlochförmige Ausnehmung in einem Seitenholm einsetzbar ist, so dass nur der im Umfang größere Teil des Trägerelements 343, an dem die Buchse 342 für das Kontaktelement 341 gehalten ist, auf der Außenseite des Seitenholms 21 aufliegt.

Figur 9 zeigt eine Innenkontakteinheit 34', die sich von der zuvor mit Bezug auf Figur 8 beschriebenen nur dadurch unterscheidet, dass das Trägerelement 343 keine Schutzstege aufweist. Dennoch ist die Buchse 342 geschützt, da sie in einer Vertiefung des Trägerelements 323 aufgenommen ist.

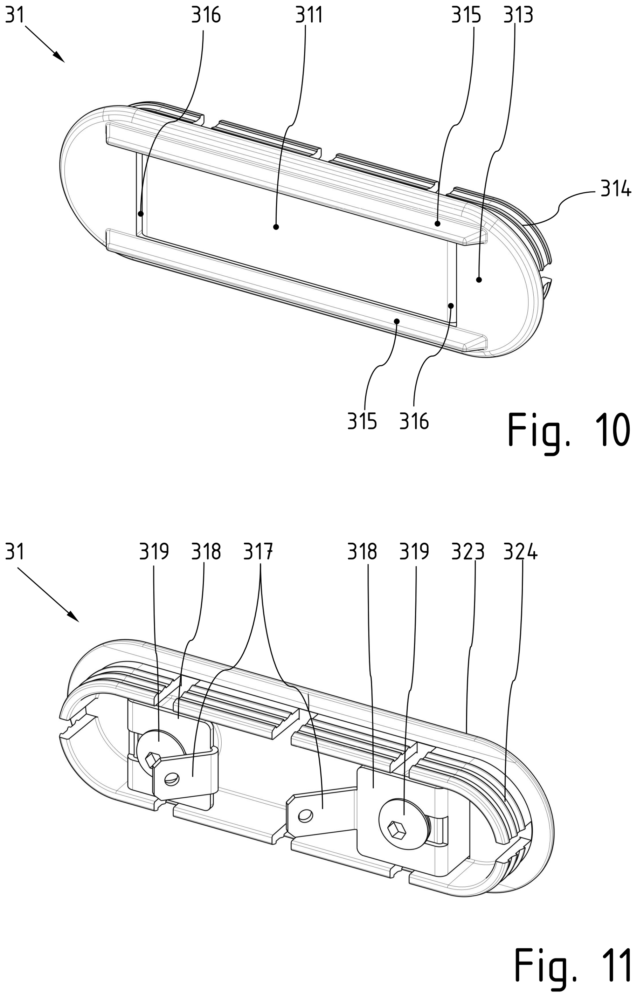

In Figur 10 ist eine Außenkontakteinheit 31 in einer perspektivischen Ansicht der Vorderseite abgebildet. Diese umfasst ein elektrisch isolierendes Trägerelement 313 und ein längliches, streifenförmiges Kontaktelement 311, das aus einem Metallblechstreifen gebildet ist und starr auf dem Trägerelement 313 befestigt ist. Es ist mit seinen Enden durch Schlitze 316 im Trägerelement 313 zur Rückseite geführt. Oberhalb und unterhalb des Kontaktelements 311, 321 besitzt das Trägerelement 313 vorspringende Schutzstege 315, die so weit hervorragen, dass das Kontaktelement 311 vor mechanischen Beschädigungen durch anstoßende Fahrgestellrahmen benachbarter Fahrgestelle geschützt ist.

Eine perspektivische Ansicht auf die Rückseite der Außenkontakteinheit 31 ist in Figur 11 dargestellt. Endabschnitte 318 des Kontaktelements 311 sind jeweils mit einer Schraube 319 von hinten an dem Trägerelement 323 befestigt. Die Endabschnitte 318 besitzen zudem jeweils eine Steckkontaktlasche 317 zum Anschluss eines Flachsteckverbinders, der aus der Kfz-Elektrik bekannt ist.

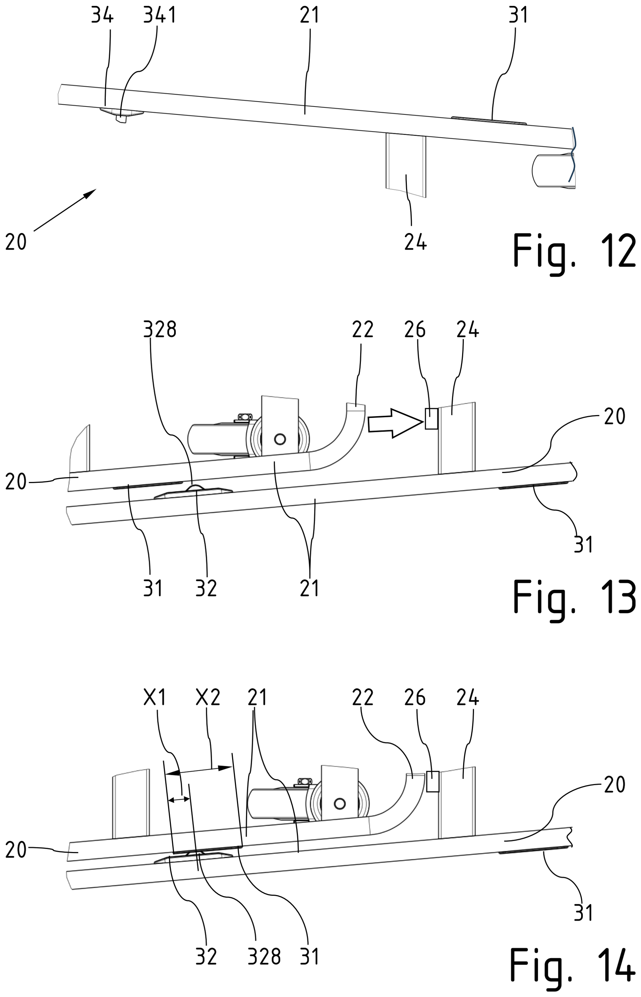

Figur 12 zeigt von oben den linken Seitenholm 21 eines Fahrgestellrahmens 20, der mit einer starren, flachen Außenkontakteinheit 31 und einer Innenkontakteinheit 34 mit einem federnd gelagerten, bolzenförmigen Kontaktelement 341 ausgestattet ist.

Figur 13 ist eine Ansicht von oben auf Ausschnitte der jeweiligen rechten Seitenholme 21 zweier Fahrgestellrahmen 20 während des Stapelvorgangs. In Figur 13 ist die Endposition des im Stapel hinteren - des in Figur 13 linken - Fahrgestells gegenüber dem im Stapel vorderen - des in Figur 13 rechten - Fahrgestells noch nicht erreicht. Die Außenkontakteinheit 31 des hinteren Fahrgestellrahmens 20 und die mit einem Federblech ausgestattete, längliche Innenkontakteinheit 32 des vorderen Fahrgestellrahmens 20 befinden sich kurz vor einer Kontaktfindung; noch berührt der vorstehende Kontaktpunkt 328 die Außenkontakteinheit 31 nicht,

Bei der Darstellung in Figur 14 ist die Endposition der Fahrgestellrahmen 20 zueinander erreicht. Der Frontabschnitt 22 des Fahrgestellrahmens 20 liegt an den Puffern 26 am Querholm 24 des vorderen Fahrgestellrahmens an. Die Außenkontakteinheit 31 und die Innenkontakteinheit 34 überlappen in einem Teilbereich ihrer Längen, so dass der vorstehende Kontaktpunkt 328 der Innenkontakteinheit 32 das Kontaktelement der Außenkontakteinheit 31 berührt und darüber eine elektrische Verbindung zwischen den benachbarten Fahrgestellen ausgebildet ist.

Hier ist erkennbar, warum es vorteilhaft ist, als Bezugspunkt des Kontaktpunkts 328 bei der Außenkontakteinheit 31 nicht die Mitte des Kontaktelements, sondern einen Bezugspunkt weiter hinten anzunehmen, beispielsweise an einem Punkt mit dem Abstand X2 zum rückwärtigen Ende, der bei etwa 20% bis 40% der Gesamtlänge X1 des Kontaktelements angeordnet ist. Da es nach vorn durch den Querbügel 24 einen Festanschlag für den eingeschobenen Einkaufswagen gibt, müssen dort nur kleine Toleranzen berücksichtigt werden und ein größerer Teil der Gesamtlänge X1 des Kontaktelements kann dazu verwendet werden, auch in einer Situation eine Kontaktierung zu ermöglichen, bei der der Einkaufswagen nicht weit genug eingeschoben worden ist, oder nach einem starken Anstoß an den elastischen Puffern 26 des Querbügels 24 wieder etwas zurückbewegt worden ist.

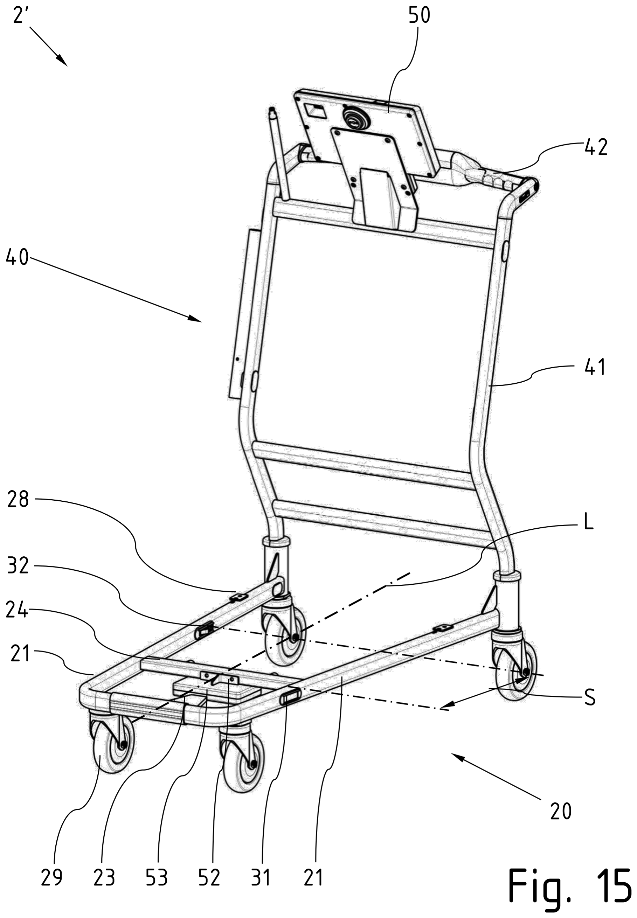

Ein in Figur 15 abgebildeter, stapelbarer Fahrgestell 2' ist zu dem Fahrgestell 2 in Figur 1 weitgehend identisch. Hinzugekommen ist lediglich eine von der Elektronikeinheit 50 getrennt ausgebildete Ladeeinheit 53, die innerhalb des Fahrgestellrahmens 20, zwischen den Seitenholmen 21, angeordnet ist. Sie ist in Fahrtrichtung hinter der Konsole 23 angeordnet und mit einem Befestigungselement 52 unterhalb des Querholms 24 befestigt.

### Bezugszeichen:

- 100: Einkaufswagen
- 2, 2': Fahrgestell

- 10: Warenkorb
- 11: Rückwandklappe
- 12: Abstandsbügel
- 13: Konsole
- 14: untere Ablagefläche
- 16: Ablagerahmen
- 19: Achse

- 20: Fahrgestellrahmen
- 21: Seitenholm
- 22: Frontabschnitt
- 23: Konsole
- 24: Querholm
- 26: Puffer
- 27: Verschlussstopfen
- 28: Wiegezellenaufnahmen
- 29: Rollen

- 31: Außenkontakteinheit
- 311, 321, 341: Kontaktelement
- 313, 323, 323',343: Trägerelement
- 317: Steckkontaktlasche
- 318: Endabschnitte
- 319,329: Schraube
- 32, 32', 34, 34': Innenkontakteinheit
- 327: Vertiefung
- 328: Kontaktpunkt
- 342: Buchse

- 40: Vertikalrahmen
- 42: Schiebebügel
- 43, 44, 45: Querbügel

- 50: Elektronikeinheit
- 51: Handscanner
- 52: Befestigungselement
- 53: Ladeeinheit

- L: Längsachse
- S: Stapelmaß
- X1: Gesamtlänge
- X2: Abstand

## Patentansprüche

1. Stapelbares Fahrgestell (2; 2') für einen Einkaufswagen (100), wenigstens umfassend einen sich nach vorn verjüngenden Fahrgestellrahmen (20) mit zwei Seitenholmen (21) und mit daran angebrachten Rollen (29) und einen Vertikalrahmen (40) mit wenigstens zwei seitlichen Holmen (41),
wobei:
- das Fahrgestell (2; 2') mit weiteren Fahrgestellen (2; 2') mit einem Stapelmaß S als Abstand in Bezug auf eine Längsachse L des Fahrgestells (2; 2') stapelbar ist,
- beide Seitenholme (21) jeweils wenigstens eine zumindest einpolige elektrische Außenkontakteinheit (31) an ihrer jeweiligen Außenseite und wenigstens eine zumindest einpolige elektrische Innenkontakteinheit (32; 32'; 34; 34') an ihrer jeweiligen Innenseite aufweisen; und
- die wenigstens eine Außenkontakteinheit (31) und die wenigstens eine Innenkontakteinheit (32; 32'; 34; 34') in Bezug auf die Längsachse L am Fahrgestellrahmen (20) in einem dem Stapelmaß S entsprechenden Abstand zueinander angeordnet sind,
**dadurch gekennzeichnet**,
- an einem Seitenholm (21) in einem Paar von einer Außenkontakteinheit (31) und einer Innenkontakteinheit (32; 32'; 34; 34') jeweils eine Kontakteinheit ein starres Kontaktelement besitzt, und jeweils eine andere Kontakteinheit ein federndes oder federnd gelagertes Kontaktelement (321, 341) besitzt,
- dass der Abstand im Stapelmaß S von einem vorstehenden Kontaktpunkt (328) des federnden Kontaktelements (321, 341) aus bis zu einem Bezugspunkt im Mittenbereich des starren Kontaktelements gemessen ist und die Länge des starren Kontaktelements mindestens 5% des Stapelmaßes S beträgt und
- dass die Kontaktelemente (321, 341) jeweils auf einem elektrisch isolierenden Trägerelement (323, 343) angebracht sind.

2. Fahrgestell (2; 2') nach Anspruch 1, **dadurch gekennzeichnet, dass** die Trägerelemente (323, 343) unterhalb und/oder oberhalb der Kontaktelemente (321, 341) jeweils wenigstens einen Schutzsteg (325, 345) aufweisen.

3. Fahrgestell (2; 2') nach Anspruch 1 oder 2, **dadurch gekennzeichnet, dass** beide Seitenholme (21) jeweils wenigstens eine elektrische Außenkontakteinheit (31) und wenigstens eine elektrische Innenkontakteinheit (32; 32'; 34; 34') aufweisen.

4. Fahrgestell (2; 2') nach einem der Ansprüche 1 bis 3, **dadurch gekennzeichnet,**
- **dass** das Fahrgestell (2) einen Querholm (24) aufweist, und
- **dass** das Stapelmaß S dem Abstand entspricht, den zwei Fahrgestelle (2; 2') untereinander einnehmen, wenn sie ineinander geschoben sind und ein Frontabschnitt (22) eines hinten stehenden Fahrgestells (2; 2') am Querholm (24) eines vorne stehenden Fahrgestells (2; 2') anliegt.

5. Fahrgestell (2; 2') nach einem der Ansprüche 1 bis 4, **dadurch gekennzeichnet, dass** wenigstens einer der Seitenholme (21) des Fahrgestellrahmens (20) jeweils wenigstens eine mehrpolige elektrische Außenkontakteinheit an seiner Außenseite und wenigstens eine mehrpolige elektrische Innenkontakteinheit an seiner Innenseite aufweist.

6. Fahrgestell (2; 2') nach Anspruch 4, **dadurch gekennzeichnet, dass** ein Seitenholm zumindest eine zweipolige Außenkontakteinheit und zumindest eine zweipolige Innenkontakteinheit an seiner Innenseite aufweist.

7. Fahrgestell (2; 2') nach Anspruch 4 oder 5, **dadurch gekennzeichnet, dass** die zweipoligen Kontakteinheiten jeweils zwei vertikal übereinander liegende Kontaktflächen aufweisen.

8. Fahrgestell (2; 2') nach Anspruch 4 oder 5, **dadurch gekennzeichnet, dass** die zweipoligen Kontakteinheiten jeweils zwei horizontal hintereinander liegende Kontaktflächen aufweisen.

9. Fahrgestell (2; 2') nach einem der Ansprüche 1 bis 8, **dadurch gekennzeichnet, dass** die Außenkontakteinheiten (31) jeweils starre Kontaktelemente besitzen und die Innenkontakteinheiten (32; 32'; 34; 34') jeweils federnde oder federnd gelagerte Kontaktelemente (321, 341) besitzen.

10. Fahrgestell (2; 2') nach einem der Ansprüche 1 bis 8, **dadurch gekennzeichnet, dass** die Innenkontakteinheiten jeweils starre Kontaktelemente besitzen und die Außenkontakteinheiten jeweils federnde Kontaktelemente besitzen.

11. Fahrgestell (2; 2') nach wenigstens einem der vorhergehenden Ansprüche, **dadurch gekennzeichnet, dass** zumindest bei den Kontakteinheiten mit federnden oder federnd gelagerten Kontaktelementen die Trägerelemente (323, 343) in eine Ausnehmung in einer inneren und/oder oder äußeren Seitenfläche der Seitenholme (21) eingesetzt sind.

12. Fahrgestell (2; 2') nach Anspruch 11, **dadurch gekennzeichnet, dass** das Trägerelement (323, 343) an seiner Rückseite einen im Umfang verkleinerten Absatz (324; 344) besitzt, über den es in die Ausnehmung im Seitenholm (21) einsetzbar ist, wobei nur ein im Umfang größerer Teil des Trägerelements (323, 343), an dem das Kontaktelement (321; 341) gehalten ist, auf der Seitenfläche des Seitenholms (21) aufliegt.

13. Fahrgestell (2; 2') nach wenigstens einem der vorhergehenden Ansprüche, **dadurch gekennzeichnet, dass** die federnden Kontaktelemente (341) bolzenförmig ausgebildet und gegen die Kraft eines Federelements im Trägerelement (343) quer zu dessen Längserstreckung verschiebbar gelagert sind.

14. Fahrgestell (2; 2') nach wenigstens einem der vorhergehenden Ansprüche, **dadurch gekennzeichnet, dass** die federnden Kontaktelemente (321) durch ein Federblech ausgebildet sind, welches eine Kontur aufweist, die es erlaubt, quer zur Längserstreckung des Seitenholms (21) elastisch verformt und dabei in Längserstreckung ausgelängt zu werden.

15. Einkaufswagen (100) mit einem Fahrgestell (2; 2') nach wenigstens einem der vorhergehenden Ansprüche, mit einer Einkaufsartikelaufnahmeeinheit, die einen oberen, sich nach vorn verjüngenden Warenkorb (10) mit einer verschwenkbaren Rückwandklappe (11) und/oder eine untere Ablagefläche (14) aufweist, die von einem gelenkig gelagertem Ablagerahmen (16) umfasst ist, welcher mit seinem hinteren Endbereich beim Stapeln von mehreren gleichen Einkaufswagen (100) anhebbar ist, wobei die Einkaufsartikelaufnahmeeinheit über wenigstens drei Wiegezellen auf oder am Fahrgestell (2; 2') gelagert ist; und wobei eine Elektronikeinheit (50) vorgesehen ist, an die die Wiegezellen (31, 32) angeschlossen sind und die mit einer Ladeeinheit verbunden ist oder die eine integrierte Ladeeinheit enthält.
